# EUROPÄISCHE PATENTSCHRIFT

(11) **EP 0 976 325 B1**
(45) Veröffentlichungstag und Bekanntmachung des Hinweises auf die Patenterteilung: **13.10.2004**
(21) Anmeldenummer: 99114405.6
(22) Anmeldetag: 22.07.1999
(51) Int. Cl.: A01N 31/08, A01N 31/16, A01N 31/14, A01N 31/06

(54) **Verfahren zur Sanatisierung von durch Viren verursachten Kontaminationen**
Process to sanitise contaminations caused by viruses
Procédé pour la désinfection de contaminations dues à des virus

(30) Priorität: 29.07.1998 DE 19834053
(43) Veröffentlichungstag der Anmeldung: 02.02.2000
(73) Patentinhaber: ZLB Behring GmbH, 35041 Marburg (DE)
(72) Erfinder: Bernhardt, Dieter, Dr., 35091 Cölbe (DE); Gröner, Albrecht, Dr., 64342 Seeheim-Jugenheim (DE)

(56) Entgegenhaltungen:
- EP-A- 0 720 851
- WO-A-91/13626
- DE-A- 3 117 792
- DE-A- 19 523 320
- US-A- 4 998 984
- PATENT ABSTRACTS OF JAPAN vol. 18, no. 114 (C-1171), 24. Februar 1994 (1994-02-24) & JP 05 306217 A (UEDA SHIGEHARU), 19. November 1993 (1993-11-19)
- DATABASE CABA [Online] O.I.ARUOMA ET AL.: "An evaluation of the antioxidant and antiviral action of extracts of rosemary and Provencal herbs" retrieved from STN-INTERNATIONAL, accession no. 97:9438 CABA Database accession no. 970300501 XP002122024 & FOOD AND CHEMICAL TOXICOLOGY, Bd. 34, Nr. 5, 1996, Seiten 449-456,
- CHEMICAL ABSTRACTS, vol. 113, no. 17, 22. Oktober 1990 (1990-10-22) Columbus, Ohio, US; abstract no. 144908, J.M.CRANCE ET AL.: "Inhibition of hepatitis A virus replication in vitro by antiviral compounds" XP002122022 & J.MED.VIROL., Bd. 31, Nr. 2, 1990, Seiten 155-160,
- CHEMICAL ABSTRACTS, vol. 131, Columbus, Ohio, US; abstract no. 252125, K.Z.BOURNE ET AL.: "Plant products as topical microbicide candidates: assessment of in vitro and in vivo activity against herpes simplex virus type 2" XP002122023 & ANTIVIRAL RES., Bd. 42, Nr. 3, 1999, Seiten 219-226,

## Beschreibung

Die Erfindung betrifft ein Verfahren zur Sanatisierung von durch Viren verursachten Kontaminationen in wässrigen Flüssigkeiten, die außer der Kontamination Zellen, Zellbestandteile oder Chromatographiesäulenmaterial, enthalten, dadurch gekennzeichnet, dass man zur Sanatisierung eine Lösung eines substituierten Phenols , ausgewählt aus der Gruppe enthaltend Carvacrol, Menthol und Thymol, wobei das Phenol in einem Gemisch aus Ethanol und Wasser in einer Gesamtmenge von weniger als 0,1 Gew.% bezogen auf das kontaminierte Substrat zugesetzt wird und der Anteil an Ethanol 1 Gew.% bezogen auf das kontaminierte Substrat nicht überschreitet und wobei die weiteren korpuskuläre Bestandteile funktionsfähig erhalten bleiben.

Es ist bekannt, daß beim Arbeiten mit humanpathogenen Viren wie HIV, HBV oder HCV im Falle einer Übertragung auf einen empfänglichen Rezipienten schwerwiegende Erkrankungen wie Aids oder Hepatitis auftreten können. Diese Gefahr ist in Untersuchungs- und Forschungslaboratorien, in denen mit humanpathogenen Viren gearbeitet wird, besonders groß. Hinzukommt, daß die dort zur Verfügung stehenden Zellkulturen einen idealen Nährboden für die Vermehrung von Viren darstellen können und die Viren von einem Medium auf ein anderes leicht verbreitet werden können, wenn es nicht gelingt, verwendete Materialien und Geräte nach einer erfolgten Viruskontamination wieder zuverlässig zu sanatisieren. Bei einer Organtransplantation können in dem Organ vorhandene Viren auf den Empfänger des Transplantates übertragen werden; aufgrund der zur Immunsuppression des Empfängers in der Regel üblichen und medikamentös herbeigeführten Vermeidung von Abstoßungsreaktionen kann eine auf diese Art erfolgte Virusinfektion zu schwerwiegenden Erkrankungen führen. Eine besondere Art der Organtransplantation stellt die Bluttransfusion dar, die bekanntermaßen zur Übertragung von Viren führen kann.

Neben physikalischen sind auch chemische Sanatisierungsverfahren bereits vorgeschlagen worden. Ein besonders häufig diskutiertes chemisches Verfahren ist die SD (solvent/detergent)-Methode. Sie ist dazu geeignet, umhüllte Viren, d.h. Viren, die von einer lipidhaltigen Membran umgeben sind, zu inaktivieren, hat jedoch den entscheidenden Nachteil, gegenüber allen bekannten nichtumhüllten Viren völlig unwirksam zu sein. Deshalb besteht aus Gründen der Sicherheit ein großes Bedürfnis chemische Sanatisierungsverfahren bereitzustellen, die auch nicht-umhüllte Viren zuverlässig inaktivieren.

In der europäischen Patentanmeldung 0 720 851 ist bereits ein Verfahren zur Inaktivierung von Viren mit Hilfe von Acridin oder Acridinderivaten, bevorzugt in Kombination mit Benzalkoniumchlorid, beschrieben worden, das in Gegenwart von Proteinen durchgeführt werden kann, deren biologische Wirksamkeit dadurch nicht wesentlich beeinträchtigt wird.

Gegenstand der Erfindung ist ein Verfahren wie in den Ansprüchen 1 bis 7 beschreiben.

DE 31 17 792 beschreibt die Verwendung einer detergenshaltigen alkoholischen Lösung von Phenol oder alkylsubstituierten Phenolen als Viruzidmittel, insbesondere gegen Hepatitis B und Papovaviren für die Haut-, Hände-, Flächen- und Instrumentendesinfektion.

WO 91/13626 beschreibt eine therapeutische Zusammensetzung, enthaltend Phenolderivate, wie z.B. Carvacrol, Thymol, Eugenol, die gegen lipid-umhüllten Viren, wie z.B. Herpesviren, verwendet wird. Der Zusatz von Propolis erhöht in synergistischer Weise die viruzide Wirkung der Phenolderivate.

Die bei dem erfindungsgemäßen Verfahren eingesetzten substituierten Phenole oder substituierten Phenoläther haben ein so breites Wirkspektrum, daß sie nicht nur gegen umhüllte, sondern auch gegen nicht-umhüllte Viren wirksam eingesetzt werden können. Als phenolische Verbindung wird dabei eine Verbindung aus der Gruppe Thymol, carvacrol, und Menthol eingesetzt.

Die genannten phenolischen Verbindungen werden im Verhältnis 1:10 bis 10:1 in einem geeigneten Lösungsmittel, zum Beispiel in einem Gemisch von Ethanol und Wasser gelöst und in einer Gesamtmenge von weniger als 0,1 Gewichtsprozent, bezogen auf das kontaminierte Substrat, der verunreinigten Zellkultur zugesetzt. Die gleiche Lösung ist aber auch hervorragend dazu geeignet, mit Viren kontaminierte Laborgeräte, insbesondere auch Chromatographiesäulen und -harze zu sanatisieren. Im allgemeinen wird zur Beseitigung der Viruskontamination eine Lösung eingesetzt, die den Wirkstoff in einer Konzentration von 0,1 g/l bis 0,001 g/l enthält. Die Sanatisierung erfolgt vorzugsweise bei einer Temperatur von 2 bis 70°C und bei einem pH-Wert von 5 bis 9. Ganz besonders bevorzugt ist ein Temperaturbereich zwischen 20 bis 60°C. In diesem Temperaturbereich läßt sich schon nach einer Einwirkungszeit von 10 Minuten der Beginn einer Sanatisierung des kontaminierten Substrats nachweisen. Eine zufriedenstellende Sanatisierung erfordert jedoch meistens einen Zeitraum von 2 bis 6 Stunden, der nur ausnahmsweise auf bis zu 24 Stunden ausgedehnt werden muß.

Im allgemeinen ist es nicht erforderlich, die nach durchgeführter Sanatisierung verbliebenen Mengen des substituierten Phenols oder Phenolethers zu entfernen. Sollte das jedoch notwendig sein, so stehen hierfür bekannte Methoden zur Verfügung, zum Beispiel die Absorption an Aktivkohle, die Dialyse oder chromatographische Verfahren.

Ein besonderer Vorteil des erfindungsgemäßen Verfahrens zur Sanatisierung von durch Viren verursachten Kontaminationen liegt in der weitestgehenden Schonung der damit behandelten Zellkulturen. Die biologischen Aktivitäten der Zellkulturen werden hierdurch nicht beeinträchtigt. Das erfindungsgemäße Sanatisierungsmittel konnte seine Wirksamkeit bereits gegen Retro-, Toga-, Flavi-, Picorna-, Herpes-, Adeno-, Reo-, Influenza-, Parainfluenza-, Calici-, Corona- oder Astroviren zeigen.

Die vorliegende Erfindung wird durch die nachfolgenden Beispiele näher erläutert:

### Beipiel 1: Sanatisierung einer DEAE-Sephadex-Chromatographiesäule

1 g DEAE-Sephadex A-50 (vorgequollen) wurde als Slurry in 20 ml PBS (pH 7.2) zu 500 ml einer Reo-3-Virus enthaltenden wässrigen Lösung (Zellkulturüberstand mit 5% FKS) mit einem Virustiter (CClD₅₀) von 5,5 log₁₀ gegeben. Nach Rühren über 30 min bei etwa 20°C wurde das gesamte Material in eine Chromatographiesäule überführt und nach Sedimentation des Harzes die Säule entleert. Danach wurde das Harz mit 150 ml Waschpuffer (0,2 M NaCl, pH 6,0 mittels KH₂PO₄/NaOH) gewaschen und schließlich mit Elutionspuffer (2,0 M NaCl, pH 8,0 mittels KH₂PO₄/NaOH) eluiert. Zur Sanatisierung wurde die Säule mit 3 Säulenvolumen einer Waschpuffer mit Carvacrollösung (1:2.000) gewaschen (im Gegenstrom) und über Nacht unter dieser Carvacrollösung bei etwa 20°C stehen gelassen. Die Säule wurde danach mit Waschpuffer regeneriert. Die Virustiter der verschiedenen Fraktionen sind in Tabelle 1 angegeben.

**Tab. 1**

| Virusgehalt verschiedener Fraktionen einer Chromatographie | | |
|---|---|---|
| Probe | Virustiter CClD₅₀/ml[log₁₀] | Viruslast (Titer x Volumen) [log₁₀] |
| Virushaltiges Ausgangsmaterial (500 ml) | 5,5 | 8,2 |
| Durchfluß (510 ml) | 5,2 | 7,9 |
| Waschpuffer (150 ml) | 4,7 | 6,9 |
| Elutionspuffer (20 ml) | 5,0 | 6,3 |
| Carvacrollösung* [1. Säulenvolumen] (12ml) | 4,2 | 5,3 |
| Carvacrollösung [nach ca. 16 Stunden Inkubation] (12ml) | ≤ 1,5 | ≤ 2,6 |
| Waschpuffer nach Sanitation [2.Säulenvolumen] (12ml) | ≤ 1,5 | ≤ 2,6 |

| | | |
|---|---|---|
| *Titerbestimmung unverzüglich nach Erhalt der Probe | | |

Wie das Beispiel zeigt, verbleibt nach der Elution der DEAE-Sephadex-Chromatographiesäule Virus in der Säule; eine Wiederverwendung der Säule ohne Sanatisierung führte zu einer Kontamination der nachfolgenden Produktcharge mit Virus. Die Sanatisierung mit Carvacrol führt zu einer vollständigen Inaktivierung von Reo-3-Virus unterhalb der Nachweisgrenze. Einer Wiederverwendung des Säulenmaterials steht demnach nichts im Wege.

### Beispiel 2: Sanatisierung einer Zellkultur

Die Bestimmung des Virusgehaltes einer Probe wird durch Infektion von Zellkulturen (Indikatorzelle mit Reihenverdünnungen der zu testenden Probe und Nachweis der Virusvermehrung in den jeweiligen Zellkulturgefäßen durch virusspezifischen zytopathischen Effekt (CPE) durchgeführt. Wenn die Indikatorzelle mit Fremdviren kontaminiert ist, kann die Vermehrung und/oder die Ausprägung des CPE beeinträchtigt sein, so daß ein zu geringer Titer festgestellt wird. Die Vermehrung eines zytopathogenen BVDV-Stammes kann durch die Kontamination einer Zellkultur, z.B. MDBK, mit einem nicht-zytopathogenen Stamm eines Pestivirus stark gehemmt sein (Interferenz). Die Infektion der Zellkultur kann u.a. durch das zur Zellkultur erforderliche (fötale) Kälberserum erfolgt sein.

Eine MDBK-Zellkultur, die mit einem nicht-zytopathogenen Pestivirus-Stamm infiziert ist, wird wie üblich passagiert (Splittingrate 1:5; Eagles Minimal Essentail Medium mit 5% FKS) und zwei Zellkulturflaschen angelegt. Eine Zellkulturflasche bleibt unbehandelt, die zweite Zellkulturflasche wird mit Thymol (1:50.000) versetzt. Beide Zellkulturflaschen werden wöchentlich passagiert, wobei die Behandlung der Zellkultur 3 Passagen lang durchgeführt wird. Nach einer Passage ohne Behandlung werden Zellen aus den jeweiligen Zellkulturflaschen in Mikrotiterplatten eingesät und eine Titration (Endpunktverdünnungsmethode) eines zytopathogenen BVDV-Stammes (Denmark) auf den jeweiligen Indikatorzellen durchgeführt. Der zytopathogene Effekt als Hinweis auf eine Virusvermehrung wird ausgewertet und der Virustiter berechnet (Spaerman-Kärber-Methode; Tabelle 2).

**Tab. 2**

| Bestimmung des Virusgehaltes in einer unbehandelten und behandelten (Thymol) Zellkultur | |
|---|---|
| Zellkultur | Virustiter (CClD₅₀/ml) [log₁₀] |
| Ausgangszellkultur | 4,3 |
| nach 3 Passagen, unbehandelt | 3,9 |
| nach 3 Passagen, Thymol-behandelt | 7,6 |

Durch Behandlung der MDBK-Zelle mit Thymol wird das nicht-zytopathogene Pestivirus inaktiviert, so daß die Zelle wieder eine optimale Empfänglichkeit für den zytopathogenen BVDV-Stamm aufweist.

## Patentansprüche

1. Verfahren zur Sanatisierung von durch Viren verursachten Kontaminationen in wässrigen Flüssigkeiten, die außer der Kontamination Zellen, Zeilbestandteile oder Chromatographiesäulenmaterial enthalten, **dadurch gekennzeichnet, dass** man zur Sanatisierung eine Lösung eines substituierten Phenols ausgewählt aus der Gruppe enthaltend Carvacrol, Menthol und Thymol, wobei das Phenol in einem Gemisch aus Ethanol und Wasser in einer Gesamtmenge von weniger als 0,1 Gew.% bezogen auf das kontaminierte Substrat zugesetzt wird und der Anteil an Ethanol 1 Gew.% bezogen auf das kontaminierte Substrat nicht überschreitet und wobei die Zellen, Zellbestandteile oder Chromatographiesäulenmaterial funktionsfähig erhalten bleiben.

2. Verfahren nach Anspruch 1, **dadurch gekennzeichnet, daß** es zur Sanatisierung von durch umhüllte oder nicht-umhüllte Viren hervorgerufene Verunreinigungen eingesetzt wird.

3. Verfahren nach den Ansprüchen 1 bis 2, **dadurch gekennzeichnet, daß** die Sanatisierung bei einer Temperatur zwischen 15 und 70°C und bei einem pH-Wert zwischen 5 und 9 durchgeführt wird.

4. Verfahren nach den Ansprüchen 1 bis 3, **dadurch gekennzeichnet, daß** die Sanatisierung über einen Zeitraum von 10 Minuten bis zu 24 Stunden durchgeführt wird.

5. Verfahren nach den Ansprüchen 1 bis 4, **dadurch gekennzeichnet, daß** das verwendete substituierte Phenol oder der Phenolether nach Beendigung der Sanatisierung wieder aus dem Substrat entfernt werden.

6. Verfahren nach den Ansprüchen 1 bis 5, **dadurch gekennzeichnet, daß** es zur Sanatisierung von mit Viren kontaminierten Chromatographiesäulen/-harzen eingesetzt wird.

7. Verfahren nach den Ansprüchen 1 bis 6, **dadurch gekennzeichnet, daß** es zur Sanatisierung von Kontaminationen eingesetzt wird, die durch Retro-, Toga-, Flavi-, Picorna-, Herpes-, Adeno-, Reo-, Influenza-, Parainfluenza-, Calici-, Corona- oder Astroviren verursacht werden.

## Claims

1. A process for sanitizing contaminations caused by viruses in aqueous fluids which the contamination apart contain cells, cell constituents or chromatography column material, **characterized in that** the sanitizing is effected using a solution of a substituted phenol selected from the group containing carvacrol, menthol and thymol, the phenol being added in a mixture of ethanol and water in a total amount of less than 0.1% by weight based on the contaminated substrate and the ethanol fraction not exceeding 1% by weight based on the contaminated substrate and the cells, cell constituents or chromatography column material being preserved with their functions intact.

2. The process as claimed in claim 1, **characterized in that** it is employed for the sanitizing of contaminations produced by coated or uncoated viruses.

3. The process as claimed in claims 1 and 2, **characterized in that** the sanitizing is carried out at a temperature between 15 and 70°C and at a pH between 5 and 9.

4. The process as claimed in claims 1, to 3, **characterized in that** the sanitizing is carried out over a period of 10 minutes up to 24 hours.

5. The process as claimed in claims 1 to 4, **characterized in that** the substituted phenol or the phenol ether used is removed from the substrate again after completion of the sanitizing.

6. The process as claimed in claims 1 to 5, **characterized in that** it is employed for the sanitizing of chromatography columns/resins contaminated with viruses.

7. The process as claimed in claims 1 to 6, **characterized in that** it is employed for the sanitizing of contaminations which are produced by retro-, toga-, flavi-, picorna-, herpes-, adeno-, reo-, influenza, parainfluenza, calici-, corona- or astroviruses.

## Revendications

1. Procédé pour la désinfection de contaminations dues à des virus dans des liquides aqueux, qui outre la contamination contiennent des cellules, des composants cellulaires ou du matériau de colonne de chromatographie, **caractérisé en ce que** l'on ajoute pour la désinfection une solution d'un phénol substitué choisi dans le groupe consistant en carvacrol, le menthol et le thymol, le phénol étant ajouté dans un mélange d'éthanol et d'eau en une quantité totale inférieure à 0,1 % en poids par rapport au substrat contaminé et la part en éthanol ne dépassant pas 1 % en poids par rapport au substrat contaminé, et les cellules, les composants cellulaires ou le matériau de colonne de chromatographie étant maintenus fonctionnels.

2. Procédé selon la revendication 1, **caractérisé en ce qu'**il est utilisé pour la désinfection de contaminations dues à des virus encapsulés ou non encapsulés.

3. Procédé selon les revendications 1 et 2, **caractérisé en ce que** la désinfection est réalisée à une température comprise entre 15 et 70 °C et à un pH compris entre 5 et 9.

4. Procédé selon les revendications 1 à 3, **caractérisé en ce que** la désinfection est réalisée pendant une durée de 10 minutes à 24 heures.

5. Procédé selon les revendications 1 à 4, **caractérisé en ce que** le phénol ou l'éther de phénol substituéss utilisés sont éliminés du substrat à la fin de la désinfection.

6. Procédé selon les revendications 1 à 5, **caractérisé en ce qu'**il est utilisé pour la désinfection de colonnes/ résines de chromatographie contaminées par des virus.s

7. Procédé selon les revendications 1 à 6, **caractérisé en ce qu'**il est utilisé pour la désinfection de contaminations qui sont dues à des rétrovirus, des togavirus, des flavivirus, des picornavirus, des herpès virus, des adénovirus, des réovirus, le virus *influenza,* le virus *parainfluenza,* des calicivirus, des coronavirus ou des astrovirus.
